# EUROPEAN PATENT SPECIFICATION

(11) **EP 0 566 719 B1**
(45) Date of publication and mention of the grant of the patent: **19.02.1997**
(21) Application number: 92923048.0
(22) Date of filing: 09.11.1992
(51) Int. Cl.: G01B 21/04, B23Q 3/155

(54) **TOUCH PROBE**
MESSFÜHLER
CAPTEUR TACTILE

(30) Priority: 09.11.1991 GB 9123853; 21.11.1991 GB 9124777; 22.07.1992 GB 9215512
(43) Date of publication of application: 27.10.1993
(60) Divisional application: 96112514.3
(73) Proprietor: Renishaw Metrology Limited, Wotton-Under-Edge, Gloucestershire GL12 8JR (GB)
(72) Inventor: HAJDUKIEWICZ, Peter, Wotton-Under-Edge Gloucest. GL12 7AR (GB); HELLEN, Graham, Andrew, Bristol Avon BS17 5TE (GB); HELLIER, Peter, Kenneth, North Nibleyire Gloucestershire GL11 6DX (GB); DABBS, John, Christopher, Chepstow Gwent NP6 5JB (GB); McMURTRY, David, Robert, Wotton-Under-Edge Gloucest. GL12 7EF (GB)
(74) Representative: Jones, Bruce Graeme Roland
(86) International application number: PCT/GB92/02070
(87) International publication number: WO 93/09398

(56) References cited:
- EP-A- 0 406 781
- WO-A-93/01466
- DE-U- 9 010 591
- GB-A- 2 167 559
- ENGINEERING vol. 226, no. 7,8, July 1986, LONDON, GB page 517 323 'Automatic probe changer enhances measuring machines'

## Description

The present invention relates to a touch probe used, for example, on a coordinate positioning machine such as a machine tool or coordinate measuring machine.

Such probes are known from U.S. 4,153,998, and comprise a fixed structure by which the probe may be connected to the movable arm of the machine, relative to which a stylus having a measuring tip for contacting the workpiece is supported. The position of a workpiece surface is detected by operating the machine to drive the measuring tip of the stylus into contact with the surface whose position is to be measured, and detecting, with the probe, contact between the measuring tip and the surface. The probe emits a signal indicative of such contact, and this is used to record the position of the movable arm and to instruct the machine control to brake its movement. In order to prevent damage to the stylus when, during braking of its movement, the movable arm overtravels the point of contact between the stylus tip and surface, the stylus is carried on a stylus-supporting member which is supported on the fixed structure in a rest location, out of which it may be displaced when a deflecting force is applied to the stylus, and to which it may return when the deflecting force is removed. This displacement of the stylus- supporting member is known as "overtravel displacement". Good positional repeatability of the stylus-supporting member relative to the fixed structure from one overtravel displacement to the next is required in order that the position of the surface may be measured accurately.

It is, on occasions, desirable to change the stylus carried by the probe. For example, the measurement of different features on a workpiece may require the use of different geometries and lengths of styli.

The document ENGINEERING, vol. 226, no. 7/8, July 1986, London, GB, page 517; 323 "Automatic probe changer enhances measuring machines" discloses a system including a rack which comprises an actuating mechanism for locking and unlocking probes to the movable arm of a machine. This is achieved by operating the machine to cause the retaining module to move one of the lids out of the way and attain a position in register with one of the probes, moving the machine downwardly into contact with one of the probes whereupon the actuating mechanism provided within the rack causes engagement between the probe and the retaining module, and subsequently moving the probe out of the rack.

Each probe is retained in the rack by a pair of jaws which engage a pair of grooves provided in the sides of the adaptor to which the probe is connected.

WO 93/01466, having an Article 54(3) relationship with the present application discloses a magazine for a coordinate measuring machine which magnetically retains a plurality of styli for use on a probe.

In our European patent application 501 710 A1, we disclose a probe enabling automatic exchange of styli, having a modular construction which includes a stylus module releasably mountable on a sensing module. The stylus module has a casing, and a stylus supporting member biased into a rest position which enables overtravel displacement relative to the casing. The sensing module comprises a fixed structure (by which it is retained on the movable arm) supporting a strain sensitive load cell on which the stylus module is magnetically retained. Contact of the stylus tip with a surface is detected by the load cell, which senses levels of strain in the stylus occurring before overtravel displacement, and which are transmitted through the casing of the stylus module to the load cell.

To provide a truly flexible measuring system, a plurality of stylus modules must be retained within the working area of the machine to enable automatic exchange of one stylus module for another. Aspects of the present invention relate to a storage system for retaining a plurality of task modules (such as a stylus module) on a machine, wherein each of the task modules is interchangeably connectable to a retaining module (such as a sensing module) supported on the movable arm of the machine.

A first aspect of the present invention, relates to a coordinate positioning machine having a magazine which includes a plurality of storage ports, each for supporting a task module, each said task module having a set of engagement elements, magnetising means being provided for urging said task module in a first direction into contact with said storage port, wherein said storage port and said task module are configured so that said engagement elements are accessible from a direction opposite to said first direction, and that, upon application to said task module of a force exceeding the force from the magnetising means, said task module may move relative to said support structure in said direction opposite to said first direction.

Such a magazine and task modules enable engagement of a task module by a retaining module, and disengagement of the task module from the storage port in a single continuous movement and without any additional machine apparatus (such as dedicated motors or electromagnets).

Typically a task module may be a stylus module. However more complex forms of task module may be provided (e.g. a temperature sensor, an accelerometer or a pressure sensor) with, where required, an appropriate retaining module.

Embodiments of the present invention will be now be described, by way of example, and with reference to the accompanying drawings in which:
Fig 1 is a section through a modular design of stylus changing probe;
Fig 2 is a perspective view of an embodiment of magazine;
Fig 3 shows a detail of Fig 2;
Fig 4 is a side view of a storage port;
Fig 5 is a plan view of the port of Fig 4;
Fig 6 shows a detail of Figs 4 and 5;
Fig 7 is a side view of the magazine of Fig 3;
Fig 8 is a front view of a second embodiment of magazine;
Fig 9 is a perspective view of a coordinate measuring machine incorporating a third embodiment of magazine; and
Fig 10 is a detail of Fig 9.

A touch probe includes a retaining module in the form of a sensing module 12 and a task module in the form of a stylus module 14 releasably mountable thereon. The stylus module 14 comprises an upper casing 16 and a lower casing 18, retained together by three bolts 20 and associated spacers 22, and enclosed by an intermediate floating skirt 24. A stylus supporting member 26 is biased into a kinematic rest position with respect to the lower casing 18 by a spring 28. The supporting member 26 is displaceable out of the rest position against the biasing action of the spring 28 thus enabling tilting of the stylus to accommodate overtravel of the probe.

The sensing module 12 comprises a fixed structure in the form of a cylindrical housing 30 and a load cell 32 supported thereon. The load cell 32 includes a first part provided by a triangular cross-section cage 34 and a second part provided by a retaining ring 36; the two parts 34,36 are interconnected by an area of weakness provided by three pillars 38 upon which semiconductor strain gauges (not shown) are mounted. The stylus module 14 is releasably mounted in a kinematic location on the sensing module 12 by engagement between a set of kinematic engagement elements on the retaining ring 36 with a set of kinematic engagement elements on the upper casing 16. The respective sets of elements are held in engagement by the attraction between magnets 40,42 provided in the upper casing 16 of the stylus module 14 and the retaining ring 36 of the sensing module 12. Thus far, such a probe is known per se and described in our co-pending European Patent Application EP-A-0 501 710.

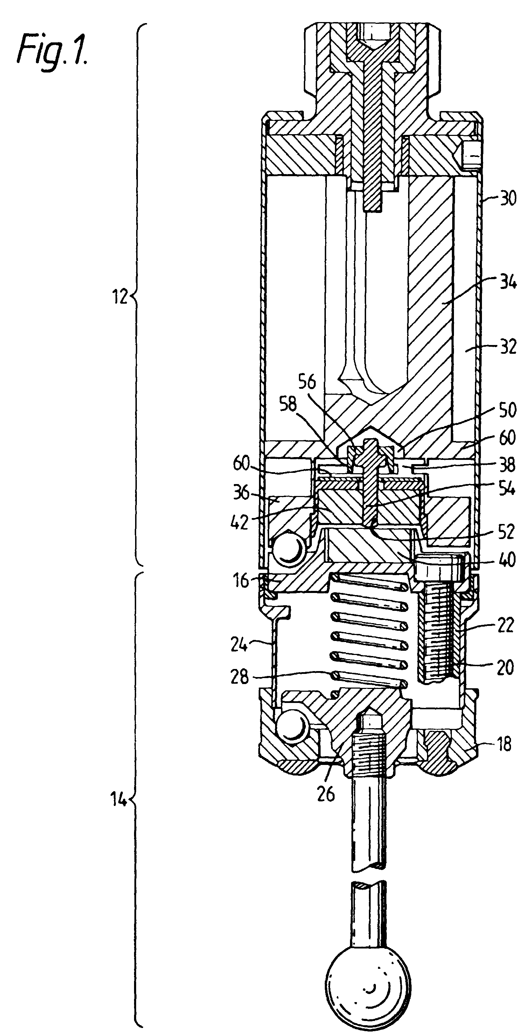

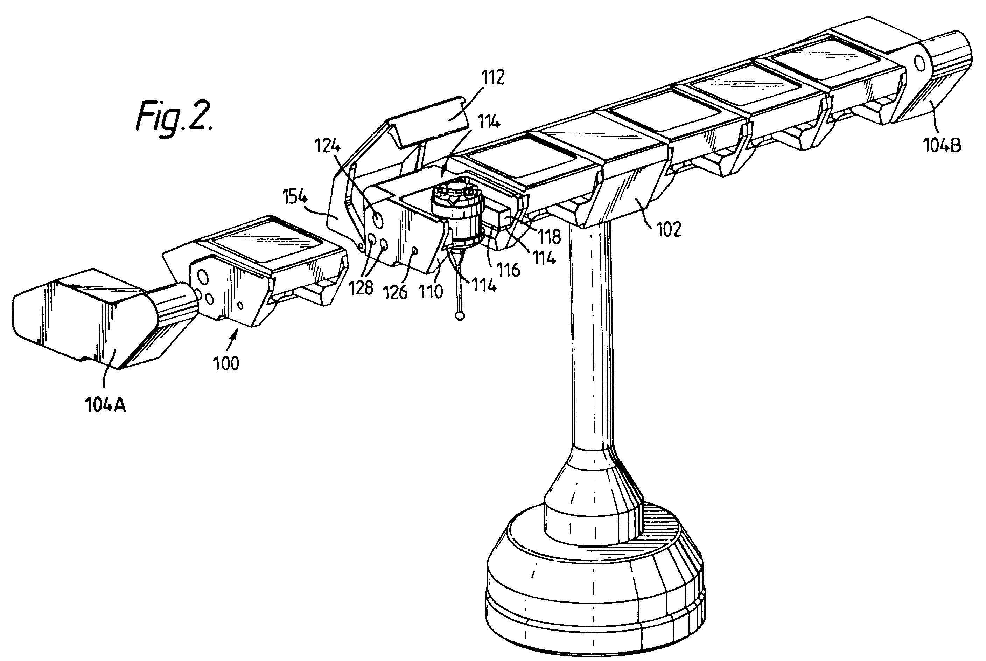

An example of a magazine suitable for use with the probe construction of Fig 1 is shown in Figs 2-7. The magazine comprises a number of modular storage ports 100 each of which is connectable to an adjacent port 102 or, where appropriate, to an adjacent electronics module 104. Each of the ports 100 has a support structure comprising a base 110 and a pair of jaws in the form of docking inserts 114 supported on the base 110. Each of the inserts has an edge 116 extending proud of the base 110 in the direction of the adjacent docking insert 114. The edge surfaces 116 extend substantially parallel to each other. A lid 112 is provided in respect of each storage port 100 to protect the engagement elements on the upper casing of the stylus module 14 from contamination by e.g. dust. The lid 112 is pivotally connected to the base 110 via a hinge 113 to enable the lid 112 to lift and therefore expose the engagement elements. A permanent magnet 118 is provided on the upper surface of each docking insert 114 to retain a stylus module 14 in a storage port 100.

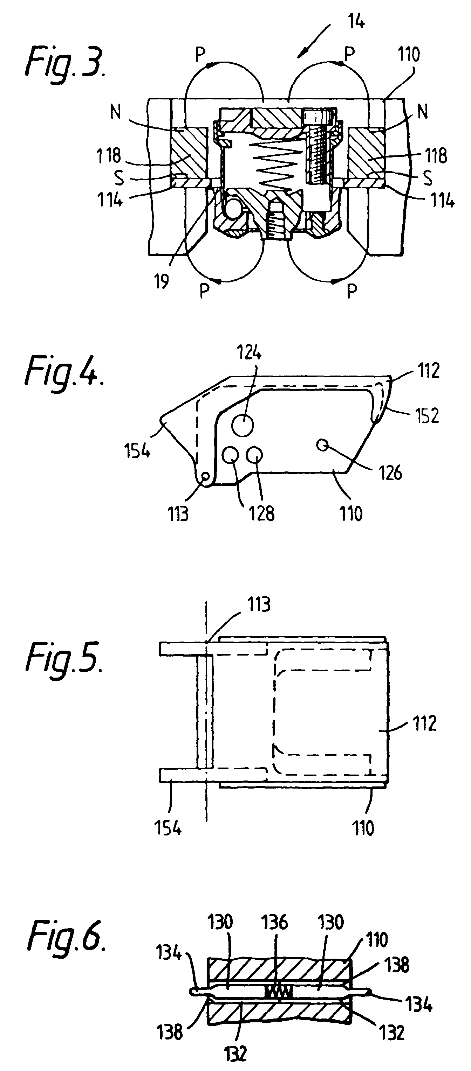

The mechanism of retention of a stylus module 14 in a storage port 100 is shown in more detail in Fig 3. The lower casing 18 of the stylus module 14 terminates at its upper end in a circular lip 19, whose diameter is greater than the diameter of the floating skirt 24. The spacing between the edge surfaces 116 is greater than the diameter of the floating skirt 24, but smaller than the diameter of the lip 19, thus allowing the stylus module 14 a degree of movement in a vertical direction which equals the distance between the upper and lower casings 16,18. The magnet 118 urges the lower casing upward, bringing the lip 19 into engagement with the docking inserts 114. The upper and lower casings 16,18 are of ferromagnetic material (e.g. steel) which, in conjunction with docking inserts 114 and magnets 118 creates a magnetic flux path as indicated by arrows P. The floating skirt is of non-ferromagnetic material to prevent magnetic forces interfering with its operation.

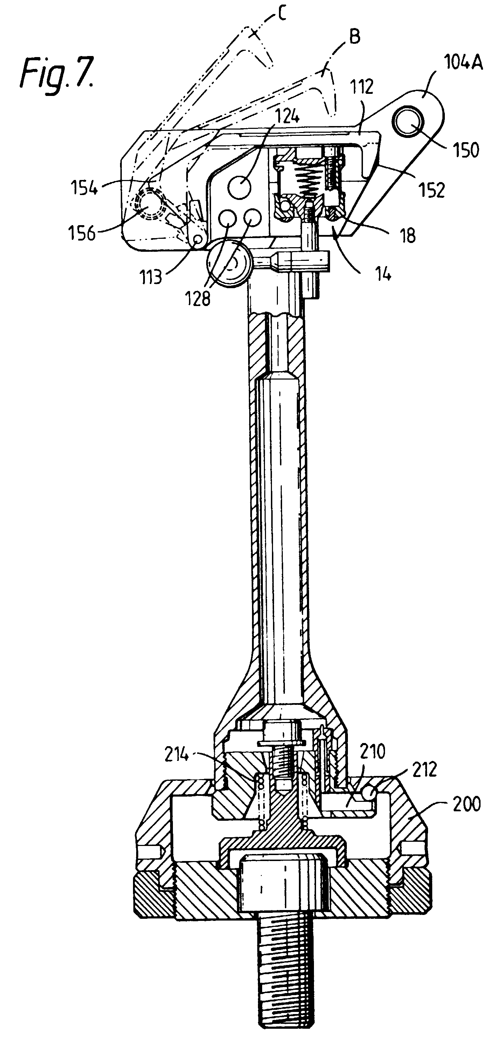

Referring now in particular to Fig 7, when the sensing module 12 comes into contact with the lid 112, the curved profile of its forward face 152 causes it to pivot upwards as the sensing module 12 moves to the left in Fig 7. Further movement of the sensing module causes continued tilting of the lid 112 to position 112 to position C in Fig 7, whereupon the sensing module 12 may move upwards thus engaging the lip 19 of the lower casing 18 of the stylus module 14 with the docking inserts 114. By Newton's third Law of Motion, the docking inserts 114 apply a downward reaction force to the lower casing 18 to hold it in place, so that continued upward movement results in breaking of the magnetic connection between the sensing module 12 and the stylus module 14. The stylus module 14 then moves back to the right in Fig 7 until the lid 112 is closed over the port 100. The sensing module 12 may then move along the magazine until it is adjacent a further port 100, whereupon it may perform a docking operation with a further stylus module.

In a docking operation the movable arm of the machine is operated to drive the sensing module 12 initially in a horizontal direction. In the course of this movement the sensing module 14 will come into contact with the lid 112 which, because of the geometry of its front surface will be lifted up by the sensing module to expose the engagement elements on the upper casing 16 of the stylus module 14. The horizontal movement of the sensing module 14 continues until the engagement element of the sensing and stylus modules 14,16 lie in register with each other. The sensing module 14 is then moved downward. During this downward movement, the two sets of engagement elements come into engagement, and the stylus module 16 simultaneously becomes disengaged from the storage port 100. The downward movement of the sensing module 14 (which now carries a stylus module 12) is then arrested and the probe moved horizontally out of the storage port 100.

In order to prevent damage to the pillars 38 (and strain gauges provided thereon) within the sensing module 12 when the housing 30 comes into contact with the magazine, a reaction flange 60 is provided at the base of the triangular cage 34. The flange 60 has a relatively tight tolerance with respect to the inner diameter of the housing 30, thus any deformation of the housing 30 due to contact with a lid 112 will react initially against the collar 60 rather than the retaining ring 36.

The magazine is mounted upon an overtravel mechanism which enables displacement of the magazine relative to the base 200 on which it is supported, so that in the event of accidental collision between the sensing module 12 and, for example, the electronic module 102, the magazine may tilt out of its position with respect to the base 200. The overtravel mechanism for the magazine is provided by three rollers 210, each of which seat in the convergent surfaces provided by an adjacent pair of balls 212. A biasing spring 214 urges the rollers 210 into engagement with the balls 212. The rollers 210 and balls 212 are wired in a series electrical circuit to detect movement of the magazine from the rest position relative to the base 200 and to emit a signal braking movement of the movable arm of the machine in the event of such a displacement.

To enable exchange of one magazine for another, the base 200 has three radially extending apertures which allow the rollers to be disengaged from the balls 212 under the influence of a force in opposition to the biasing force provided by the spring 214, and the magazine to be rotated about its axis until the rollers 210 lie in register with the aforementioned apertures, whereupon the magazine may be removed from the base. Such a changing mechanism is more fully described in our U.S. patent no. 4,349,946.

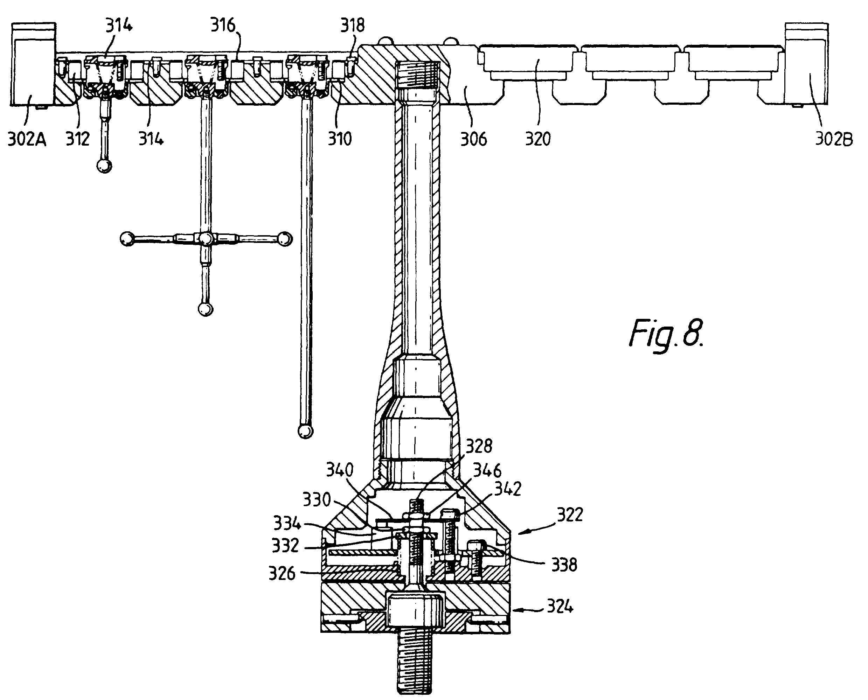

A modified form of the magazine shown in Fig 2 will now be described with reference to Fig 8.

The magazine of Fig 8 differs from the magazine of Fig 2 in that the body of the magazine 308 is machined from a single piece of aluminium. Docking inserts 310 support permanent magnets 312 which are retained in position by a spacer 314 and a retaining plate 316, a fastened in place by retaining screws 318. An individually movable lid 320 is provided in respect of each storage port. The base of the magazine has a top housing 322 biased into a kinematic rest position with respect to a bottom housing 324 by the action of a compression spring 326 held in place by clamping screw 328, nut 330 and washer 332. A microswitch 334 is supported on a printed circuit board 336, which is in turn retained in the base of the upper housing 322 by three retaining bolts 338. Also retained in the base of the housing 322 is a planar contact spring 340, supported on a further bolt 342. The free end of the contact spring 340 lies adjacent the microswitch 334, and the displacement of this free end from the microswitch can be adjusted by means of an adjusting nut 346 provided on screw 328. In the event of a crash between, for example, the movable arm and the magazine, the magazine will be allowed to tilt relative to the base 324 against the action of the compression spring 326. This tilting motion will cause the planar contact spring 340 to come into contact with the microswitch 334 which will then emit a crash signal arresting movement of the movable arm.

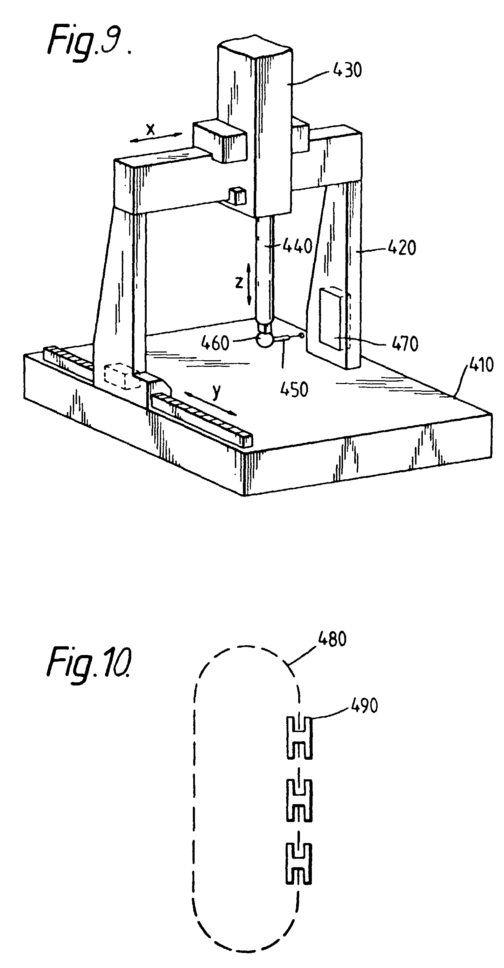

Referring now to Figs 9 and 10, a coordinate measuring machine 400 comprises a table 410 along which a bridge 420 moves in a direction defined as the Y direction. A carriage 430 is supported on the bridge for movement relative to the bridge in the direction defined as the X direction, which is orthogonal to the Y direction, and a movable arm 440 is movable within the carriage relative to both, the carriage 430 in a direction defined as the Z direction. Thus, a support structure for the movable arm 440 comprising the bridge 420 and the carriage 430 provides movement of the movable arm 440 in three dimensions relative to the table 410. In an alternative, and entirely equivalent construction of the coordinate measuring machine, the bridge 420 is stationary and the table 410 moves in the X and Y directions relative to the bridge. An inspection probe 450 is supported at the end of the movable arm 440 via a probe head 460, which provides orientation of the probe 450 relative to the movable arm 440 about two orthogonal rotational axes.

Traditionally, a magazine is supported on the table 410 of a coordinate measuring machine. However, in this embodiment of the present invention, the magazine is supported inside a cavity 470 provided in the bridge 420 of the machine. The magazine supported inside the cavity 470 may be of the type illustrated in e.g. Fig 2. Alternatively, if free access by the probe 450 to all of the ports of the magazine is not possible, a storage port may be supported on a conveyor belt 480. The conveyor belt 480 is driven by motors (not shown) which circulate the ports 490 until the appropriate port is accessible by the probe 450.

Retaining the magazine in the bridge 420 of the machine has several advantages. Firstly, the total available volume of the machine which may be used to inspect parts is increased substantially by removing the magazine from the table 410. Secondly, an exchange operation may be performed while the bridge 420 is moving from one end of the table 410 to another, thus speeding up substantially the cycle time required to perform a measurement operation.

## Claims

1. A coordinate positioning machine having an arm and a table movable relative to each other; a retaining module (12) provided on the arm, having a first set of engagement elements; at least one task module (14) stored within the working area of the machine, said task module (14) having a second set of engagement elements which are releasably engageable with said first set of engagement elements on said retaining module (12); a magazine having a plurality of storage ports (100) each for storing a said task module (14), each storage port (100) having a pair of jaws extending in a first direction, and spaced apart in a second direction; means for magnetically urging said task module (14) into engagement with said storage port (100) in a third direction transverse to said first and second directions; said retaining module, said task module and said storage port are configured so that, when said task module is retained in said storage port, the second set of engagement elements on the task module are accessible to the first set of engagement elements on the retaining module from a direction opposite to the third direction; the task module is disengageable from the storage port in said direction opposite to the third direction; and so that, when first and second elements are engaged, the retaining module may carry the task module away from the storage port substantially in said first direction wherein said task module is one of: a temperature sensor, an accelerometer, a pressure sensor, and a stylus module, the stylus module having a casing upon which said second set of engagement elements are provided, and a stylus supporting member biased into a repeatable rest position within said casing.

2. A machine according to claim 1, wherein said task modules (14) have an upper and a lower casing (16,18), and a neck (24) extending therebetween, said second set of engagement elements being provided on said upper casing, and wherein the jaws (114) of said storage ports (100) have a spacing wider than the neck (24) and narrower than the lower casing (16) so that when said task module (14) is retained in said storage port (100), the lower casing (16) is magnetically urged into engagement with the jaws (114) on one side thereof, the neck (24) extends between the jaws (114), and the upper casing (16) lies on the other side of the jaws.

3. A machine according to claim 1 or claim 2, wherein said magnetic urging means (118) is provided on the magazine.

4. A machine according to claim 3 wherein said magnetic urging means is a permanent magnet (118).

5. A magazine for use on a coordinate positioning machine, the magazine containing a plurality of task modules (14) each having a set of engagement elements to enable engagement of a task module (14) by a retaining module (12) provided on a movable arm of the machine, performance of an operation by the machine using said task module (14), and return of said task module (14) to the magazine, said task module being one of: a temperature sensor, an accelerometer, a pressure sensor, and a stylus module, the stylus module having a casing upon which said set of engagement elements are provided, and a stylus supporting member biased into a repeatable rest position within said casing, the magazine comprising:
a plurality of storage ports (100) each for retaining a said task module (14), each storage port (100) having a pair of jaws (114) extending in a first direction and being spaced apart in a second direction;
characterised by:
means (118) for magnetically urging a said task module (14) into engagement with said jaws (114) in a third direction, transverse to said first and second directions; and
wherein the spacing of said jaws (114), and the configuration of said task modules (14) is such that said engagement elements are accessible from a direction opposite to said third direction and said task modules (14) are disengageable from said storage ports (100) against the action of said magnetic urging means (118) in said direction opposite to said third direction.

6. A magazine according to claim 5 comprising an individually movable lid (112) provided in respect of each storage port (100), the lid (112) being movable by the retaining module (12) in an upward pivoting movement to reveal said task module (14).

7. A magazine according to claim 5 wherein said task modules (14) have: an upper and a lower casing (16,18) and a neck (24) extending therebetween, said set of engagement elements being provided on the upper casing (16), and wherein the jaws (114) of said storage ports (100) have a spacing wider than the neck (24) and narrower than the lower casing (18), so that when said task modules (14) are retained in said storage port (100), the lower casing (18) is magnetically urged into engagement with the jaws (14) on one side thereof, the neck (24) extends between the jaws (114), and the upper casing (16) is on the other side of the jaws (114).

8. A method of operating a coordinate positioning machine having an arm and a table movable relative to each other; a retaining module (12) provided on the arm; at least one task module (14), releasably engageable with said retaining module (12); a magazine having a plurality of storage ports (100), each storage port (100) having a pair of jaws (114) for retaining a task module (14); the method comprising the steps of sequentially:
engaging a task module (14) with said retaining module (12), by magnetically urging the task module onto said retaining module;
operating the machine to perform an operation (such as measurement of workpiece dimensions) with the task module:
operating the machine to bring the task module (14) into engagement with the jaws (114) of a storage port (100);
operating the machine to move said retaining module (12) away from the storage port (100) in a sense opposite to the sense of the magnetic attraction force between the retaining module (12) and task module (14); wherein
during said movement of said retaining module away (12) from the storage port (100) the jaws (114) of the storage port (100) apply a reaction force to the task module (14), equal and opposite to the said magnetic attraction force, thereby retaining the task module (14) in the storage port (100) and enabling disengagement of said retaining module from the task module by virtue of the movement of the movable arm and thus said retaining module.

## Patentansprüche

1. Eine Koordinatenpositionierungsmaschine mit einem Arm und einem Tisch, die relativ zueinander bewegbar sind; einem Festhaltemodul (12), das am Arm vorgesehen ist und einen ersten Satz von Eingriffselementen aufweist; wenigstens einem Aufgabenmodul (14), das innerhalb des Arbeitsbereichs der Maschine gelagert ist, wobei das Aufgabenmodul (14) einen zweiten Satz von Eingriffselementen aufweist, die lösbar mit dem ersten Satz von Eingriffselementen am Festhaltemodul (12) in Eingriff bringbar sind; einem Magazin mit einer Mehrzahl von Lagerporten (100) jeweils zum Lagern eines Aufgabenmoduls (14), wobei jeder Lagerport (100) ein Paar von Klauen aufweist, die sich in einer ersten Richtung erstrecken und in einer zweiten Richtung voneinander beabstandet sind; Mitteln, welche magnetisch das Aufgabenmodul (14) in Eingriff mit dem Lagerport (100) in einer dritten Richtung quer zu den ersten und zweiten Richtungen drängen; wobei das Festhaltemodul, das Aufgabenmodul und der Lagerport so konfiguriert sind, daß dann, wenn das Aufgabenmodul im Lagerport festgehalten ist, der zweite Satz von Eingriffselementen am Aufgabenmodul für den ersten Satz von Eingriffselementen am Festhaltemodul aus einer der dritten Richtung entgegengesetzten Richtung zugänglich ist; das Aufgabenmodul außer Eingriff mit dem Lagerport in der der dritten Richtung entgegengesetzten Richtung bringbar ist; und so, daß dann, wenn die ersten und zweiten Elemente in Eingriff stehen, das Festhaltemodul das Aufgabenmodul weg vom Lagerport im wesentlichen in der ersten Richtung tragen kann, wobei das Aufgabenmodul entweder ein Temperatursensor, ein Beschleunigungsmesser, ein Drucksensor oder ein Tastermodul ist, wobei das Tastermodul ein Gehäuse, an welchem der zweite Satz von Eingriffselementen vorgesehen ist, und ein den Taster abstützendes Bauteil aufweist, das in eine wiederholbare Ruheposition innerhalb des Gehäuses vorgespannt ist.

2. Eine Maschine nach Anspruch 1,
bei der die Aufgabenmodule (14) ein oberes und ein unteres Gehäuse (16, 18) sowie einen sich dazwischen erstreckenden Hals (24) aufweisen, wobei der zweite Satz von Eingriffselementen am oberen Gehäuse vorgesehen ist, und bei dem die Klauen (114) der Lagerporte (100) einen Abstand aufweisen, der breiter als der Hals (24) und schmaler als das untere Gehäuse (16) ist, so daß dann, wenn das Aufgabenmodul (14) im Lagerport (100) festgehalten ist, das untere Gehäuse (16) magnetisch in Eingriff mit den Klauen (114) an der einen Seite davon gedrängt ist, der Hals (24) sich zwischen den Klauen (114) erstreckt und das obere Gehäuse (16) auf der anderen Seite der Klauen liegt.

3. Eine Maschine nach Anspruch 1 oder Anspruch 2,
bei der das magnetische drängende Mittel (118) auf dem Magazin vorgesehen ist.

4. Eine Maschine nach Anspruch 3,
bei der das magnetische drängende Mittel ein Permanentmagnet (118) ist.

5. Ein Magazin für die Verwendung an einer Koordinatenpositionierungsmaschine, wobei das Magazin eine Mehrzahl von Aufgabenmodulen (14) enthält, die jeweils einen Satz von Eingriffselementen aufweisen, um den Eingriff eines Aufgabenmoduls (14) durch ein Festhaltemodul (12), das an einem bewegbaren Arm der Maschine vorgesehen ist, die Durchführung einer Operation durch die Maschine unter Verwendung des Aufgabenmoduls (14) und die Rückkehr des Aufgabenmoduls (14) zum Magazin zu ermöglichen, und wobei das Aufgabenmodul entweder ein Temperatursensor, ein Beschleunigungsmesser, ein Drucksensor oder ein Tastermodul ist, wobei das Tastermodul ein Gehäuse, an welchem der Satz von Eingriffselementen vorgesehen ist, und ein den Taster abstützendes Bauteil aufweist, das in eine wiederholbare Ruheposition innerhalb des Gehäuses vorgespannt ist, und wobei das Magazin umfaßt:
eine Mehrzahl von Lagerporten (100) jeweils zum Festhalten eines Aufgabenmoduls (14), wobei jeder Lagerport (100) ein Paar von Klauen (114) aufweist, die sich in einer ersten Richtung erstrecken und in einer zweiten Richtung voneinander beabstandet sind,
gekennzeichnet durch:
Mittel (118), die ein Aufgabenmodul (14) magnetisch in Eingriff mit den Klauen (114) in einer dritten Richtung quer zu den ersten und zweiten Richtungen drängen, und dadurch,
daß der Abstand der Klauen (114) und die Konfiguration der Aufgabenmodule (14) derart ist, daß die Eingriffselemente aus einer der dritten Richtung entgegengesetzten Richtung zugänglich sind und die Aufgabenmodule (14) außer Eingriff mit den Lagerporten (100) gegen die Wirkung der magnetischen drängenden Mittel (118) in der der dritten Richtung entgegengesetzten Richtung bringbar sind.

6. Ein Magazin nach Anspruch 5
mit einem individuell bewegbaren Deckel (112), der bezüglich jedes Lagerports (100) vorgesehen ist, wobei der Deckel (112) durch das Festhaltemodul (12) in einer nach oben gerichteten Schwenkbewegung bewegbar ist, um das Aufgabenmodul (14) aufzudecken.

7. Ein Magazin nach Anspruch 5,
bei dem die Aufgabenmodule (14) aufweisen: ein oberes und ein unteres Gehäuse (16, 18) und einen sich dazwischen erstreckenden Hals (24), wobei der Satz von Eingriffselementen am oberen Gehäuse (16) vorgesehen ist, und bei dem die Klauen (114) der Lagerporte (100) einen Abstand aufweisen, der breiter als der Hals (24) und schmaler als das untere Gehäuse (18) ist, so daß dann, wenn die Aufgabenmodule (14) im Lagerport (100) festgehalten sind, das untere Gehäuse (18) magnetisch in Eingriff mit den Klauen (14) an der einen Seite davon gedrängt sind, der Hals (24) sich zwischen den Klauen (114) erstreckt und das obere Gehäuse (16) sich an der anderen Seite der Klauen (114) befindet.

8. Ein Verfahren zum Betreiben einer Koordinatenpositionierungsmaschine mit einem Arm und einem Tisch, die relativ zueinander bewegbar sind; einem Festhaltemodul (12), das am Arm vorgesehen ist, wenigstens einem Aufgabenmodul (14), das lösbar mit dem Festhaltemodul (12) in Eingriff bringbar ist; einem Magazin mit einer Mehrzahl von Lagerporten (100), wobei jeder Lagerport (100) ein Paar von Klauen (114) zum Festhalten eines Aufgabenmoduls (14) aufweist; und wobei das Verfahren die aufeinanderfolgenden Schritte umfaßt:
daß ein Aufgabenmodul (14) mit dem Festhaltemodul (12) in Eingriff gebracht wird, indem das Aufgabenmodul magnetisch auf das Festhaltemodul gedrängt wird;
daß die Maschine betrieben wird, um eine Operation (wie beispielsweise eine Messung von Werkstückabmessungen) mit dem Aufgabenmodul durchzuführen;
daß die Maschine betrieben wird, um das Aufgabenmodul (14) in Eingriff mit den Klauen (114) eines Lagerports (100) zu bringen;
daß die Maschine betrieben wird, um das Festhaltemodul (12) weg vom Lagerport (100) in einem dem Sinn der magnetischen Anziehungskraft zwischen dem Festhaltemodul (12) und dem Aufgabenmodul (14) entgegengesetzten Sinn zu bewegen; wobei
während der Bewegung des Festhaltemoduls (12) weg vom Lagerport (100) die Klauen (114) des Lagerports (100) eine Reaktionskraft auf das Aufgabenmodul (14) aufbringen, die gleich und entgegengesetzt zu der magnetischen Anziehungskraft ist, wodurch das Aufgabenmodul (14) im Lagerport (100) festgehalten und das Lösen des Festhaltemoduls vom Aufgabenmodul aufgrund der Bewegung des bewegbaren Arms und dadurch des Festhaltemoduls ermöglicht wird.

## Revendications

1. Une machine à positionner à coordonnées ayant un bras et une table mobiles l'un par rapport à l'autre; un module de retenue (12) fourni sur le bras, ayant un premier jeu d'éléments d'engagement; au moins un module de tâche (14) rangé dans la zone de travail de la machine, ledit module de tâche (14) ayant un deuxième jeu d'éléments d'engagement qui sont engageables de façon relâchable avec ledit premier jeu d'éléments d'engagement sur ledit module de retenue (12); un magasin ayant une pluralité de ports de rangement (100), chacun servant à ranger un dit module de tâche (14), chaque port de rangement (100) ayant une paire de mors s'étendant dans une première direction, et espacés dans une deuxième direction; un moyen pour inciter magnétiquement ledit module de tâche (14) à entrer en engagement avec ledit port de rangement (100) dans une troisième direction transversale auxdites première et deuxième directions; ledit module de retenue, ledit module de tâche et ledit port de rangement sont configurés de sorte que, lorsque ledit module de tâche est retenu dans ledit port de rangement, le deuxième jeu d'éléments d'engagement sur le module de tâche sont accessibles au premier jeu d'éléments d'engagement sur le module de retenue d'une direction opposée à la troisième direction; le module de tâche est dégageable du port de rangement dans ladite direction opposée à la troisième direction; et de sorte que, lorsque les premier et deuxième éléments sont engagés, le module de retenue puisse éloigner le module de tâche du port de rangement substantiellement dans ladite première direction dans quoi ledit module de tâche est: un capteur de température, un accéléromètre, un capteur de pression, ou un module stylet, le module stylet ayant un boîtier sur lequel ledit deuxième jeu d'éléments d'engagement sont fournis, et un élément de support de stylet penché vers une position de repos répétable dans ledit boîtier.

2. Une machine conformément à la revendication 1, dans laquelle lesdits modules de tâche (14) ont un boîtier supérieur et inférieur (16, 18), et un col (24) s'étendant entre ces derniers, ledit deuxième jeu d'éléments d'engagement étant fournis sur ledit boîtier supérieur, et dans laquelle les mors (114) desdits ports de rangement (100) ont un espacement plus large que le col (24) et plus étroit que le boîtier inférieur (18) de sorte que, lorsque ledit module de tâche (14) est retenu dans ledit port de rangement (100), le boîtier inférieur (18) est magnétiquement incité à entrer en engagement avec les mors (114) d'un côté de ces derniers, le col (24) s'étend entre les mors (114), et le boîtier supérieur (16) est situé de l'autre côté des mors.

3. Une machine conformément à la revendication 1 ou à la revendication 2, dans laquelle ledit moyen d'incitation magnétique (118) est fourni sur le magasin.

4. Une machine conformément à la revendication 3, dans laquelle ledit moyen d'incitation magnétique est un aimant permanent (118).

5. Un magasin pour utilisation sur une machine à positionner à coordonnées, le magasin contenant une pluralité de modules de tâche (14), chacun ayant un jeu d'éléments d'engagement pour permettre l'engagement d'un module de tâche (14) par un module de retenue (12) fourni sur un bras mobile de la machine, l'exécution d'une opération par la machine utilisant ledit module de tâche (14), et le retour dudit module de tâche (14) au magasin, ledit module de tâche étant: un capteur de température, un accéléromètre, un capteur de pression, ou un module stylet, le module stylet ayant un boîtier sur lequel ledit jeu d'éléments d'engagement sont fournis, et un élément de support de stylet penché vers une position de repos répétable dans ledit boîtier, le magasin comprenant:
une pluralité de ports de rangement (100) servant à retenir un dit module de tâche (14), chaque port de rangement (100) ayant une paire de mors (114) s'étendant dans une première direction, et étant espacés dans une deuxième direction;
caractérisé par:
un moyen (118) pour inciter magnétiquement un dit module de tâche (14) à entrer en engagement avec lesdits mors (114) dans une troisième direction transversale auxdites première et deuxième directions; et
dans lequel l'espacement desdits mors (114), et la configuration desdits modules de tâche (14) sont tels que lesdits éléments d'engagement sont accessibles d'une direction opposée à ladite troisième direction et lesdits modules de tâche (14) sont dégageables desdits ports de rangement (100) contre l'action dudit moyen d'incitation magnétique (118) dans ladite direction opposée à ladite troisième direction.

6. Un magasin conformément à la revendication 5 comprenant un couvercle individuellement mobile (112) fourni respectivement à chaque port de rangement (100), le couvercle (112) pouvant être déplacé par le module de retenue (12) dans un mouvement de pivotement vers le haut pour révéler ledit module de tâche (14).

7. Un magasin conformément à la revendication 5, dans lequel lesdits modules de tâche (14) ont: un boîtier supérieur et inférieur (16, 18) et un col (24) s'étendant entre ces derniers, ledit jeu d'éléments d'engagement étant fournis sur le boîtier supérieur (16), et dans lequel les mors (114) desdits ports de rangement (100) ont un espacement plus large que le col (24) et plus étroit que le boîtier inférieur (18), de sorte que lorsque lesdits modules de tâche (14) sont retenus dans ledit port de rangement (100), le boîtier inférieur (18) est magnétiquement forcé à entrer en engagement avec les mors (114) d'un côté de ces derniers, le col (24) s'étend entre les mors (114), et le boîtier supérieur (16) est de l'autre côté des mors (114).

8. Une méthode pour actionner une machine à positionner à coordonnées ayant un bras et une table mobiles l'un par rapport à l'autre; un module de retenue (12) fourni sur le bras; au moins un module de tâche (14), engageable de façon relâchable avec ledit module de retenue (12); un magasin ayant une pluralité de ports de rangement (100) servant à retenir un module de tâche (14), chaque port de rangement (100) ayant une paire de mors (114); la méthode comprenant les étapes séquentielles suivantes:
l'engagement d'un module de tâche (14) avec ledit module de retenue (12), en incitant magnétiquement le module de tâche sur ledit module de retenue;
l'actionnement de la machine pour exécuter une opération (telle que la mesure des dimensions d'une pièce) avec le module de tâche;
l'actionnement de la machine pour mettre le module de tâche (14) en engagement avec les mors (114) d'un port de rangement (100);
l'actionnement de la machine pour éloigner ledit module de retenue (12) du port de rangement (100) dans un sens opposé au sens de la force d'attraction magnétique entre le module de retenue (12) et le module de tâche (14); dans quoi
pendant ledit éloignement dudit module de retenue (12) du port de rangement (100), les mors (114) du port de rangement (100) appliquent une force de réaction au module de tâche (14), égale et opposée à ladite force d'attraction magnétique, retenant ainsi le module de tâche (14) dans le port de rangement (100) et permettant le dégagement dudit module de retenue du module de tâche en vertu du mouvement du bras mobile et ainsi dudit module de retenue.
